# FASCICULE DE BREVET EUROPEEN

(11) **EP 3 100 095 B1**
(45) Date de publication et mention de la délivrance du brevet: **10.03.2021**
(21) Numéro de dépôt: 15702649.3
(22) Date de dépôt: 15.01.2015
(51) Int. Cl.: G02B 17/00, G01J 1/42, G02B 26/06, G02B 27/00

(54) **DISPOSITIF DE TRAITEMENT D'UN RAYONNEMENT LUMINEUX/OPTIQUE, PROCEDE ET SYSTEME DE CONCEPTION D'UN TEL DISPOSITIF**
VORRICHTUNG ZUR VERARBEITUNG VON LICHTSTRAHLUNG/OPTISCHER STRAHLUNG, VERFAHREN UND SYSTEM ZUM ENTWERFEN SOLCH EINER VORRICHTUNG
DEVICE FOR PROCESSING LIGHT/OPTICAL RADIATION, METHOD AND SYSTEM FOR DESIGNING SUCH A DEVICE

(30) Priorité: 30.01.2014 FR 1450715
(43) Date de publication de la demande: 07.12.2016
(73) Titulaire: Cailabs, 35000 Rennes (FR)
(72) Inventeur: MORIZUR, Jean-François, 35000 Rennes (FR); LABROILLE, Guillaume, 35000 Rennes (FR); TREPS, Nicolas, 75011 Paris (FR)
(74) Mandataire: IP Trust
(86) Numéro de dépôt international: PCT/EP2015/050711
(87) Numéro de publication internationale: WO 2015/113831

(56) Documents cités:
- EP-A1- 0 979 546
- WO-A1-2012/085046
- DE-A1- 10 203 864
- US-A- 5 058 123
- US-A- 5 586 139
- US-A- 5 946 330
- US-A- 6 134 259
- US-B1- 6 370 166
- US-B1- 6 430 328
- US-B2- 7 118 216
- JEAN-FRANÇOIS MORIZUR ET AL: "Programmable unitary spatial mode manipulation", JOURNAL OF THE OPTICAL SOCIETY OF AMERICA A, vol. 27, no. 11, 1 novembre 2010 (2010-11-01), pages 2524-31, XP055000594, ISSN: 1084-7529, DOI: 10.1364/JOSAA.27.002524

## Description

La présente invention concerne un dispositif de traitement d'un rayonnement lumineux/optique, en particulier par une succession de propagations et de modifications de la phase spatiale du rayonnement lumineux. Elle concerne également un procédé et un système pour la conception d'un tel dispositif.

Le domaine de l'invention est le domaine du traitement d'un rayonnement optique et en particulier le domaine du traitement d'un rayonnement optique nécessitant une succession de propagations du rayonnement lumineux.

### Etat de la technique

On connait US 6 430 328 qui décrit un dispositif d'interrupteur optique, comprenant des modulateurs de phase spatiale utilisés comme déflecteurs en changeant la direction de la lumière par changement de phase.

On connaît du document EP979546 un résonateur optique muni d'un agencement de surfaces réfléchissantes, entre lesquelles la lumière est réfléchie de multiples fois en produisant des ondes stationnaires pour certaines fréquences de résonance. Le rayonnement lumineux embrasse toute l'étendue de la cavité définie entre les surfaces réfléchissantes, et se réfléchit sur un unique emplacement de réflexion correspondant à toute l'étendue des surfaces réfléchissantes.

On connait l'article JEAN-FRANCOIS MORIZUR et al, « Programmable unitary spatial mode manipulation », qui décrit un dispositif pour la manipulation de modes spatiaux qui utilise un miroir déformable, deux miroirs plans, des cubes séparateurs, et une lentille cylindrique et une lentille sphérique. Un tel dispositif est relativement encombrant.

Le document WO2012/085046 A1 décrit un système pour corriger l'effet d'un milieu diffusant sur un rayonnement optique ayant propagé dans ce milieu diffusant, ou pour transformer de manière arbitraire les propriétés spatiales d'un rayonnement optique. Il s'agit d'un système de traitement du rayonnement lumineux.

Le système décrit dans ce document comprend une pluralité de moyens optiques (lames de phase ou modulateurs de phase spatiale), séparés les uns des autres, dont le profil de phase peut être ajusté individuellement lors d'une étape d'optimisation, et qui permettent chacun de modifier la phase spatiale du rayonnement lumineux qui les traverse ou qui se réfléchit sur eux. C'est la séquence de ces modifications de phase spatiales du rayonnement lumineux séparés par des propagations qui permet de traiter de manière générale le rayonnement lumineux.

Plus généralement, les systèmes optiques prévus pour traiter un rayonnement lumineux comprennent une pluralité de moyens optiques séparés les uns des autres et réalisant chacun un traitement donné sur le rayonnement optique.

Ces systèmes optiques qui comprennent plusieurs moyens optiques permettant de modifier le profil de phase du rayonnement et dans lesquels le rayonnement optique réalise une succession de propagations présentent un inconvénient majeur. Dans ces systèmes, le positionnement des moyens optiques les uns par rapport aux autres et par rapport au rayonnement lumineux, doit être très précis, typiquement de l'ordre du micron, ce qui peut être difficile à atteindre, consommateur en temps de montage, et augmente les contraintes sur la rigidité du montage. Le mauvais positionnement d'un élément optique provoque une dégradation du traitement réalisé sur le rayonnement optique. Le rayonnement optique en sortie du dispositif de traitement est donc alors dégradé. Cette dégradation peut prendre la forme, par exemple, d'une perte d'intensité ou d'une déformation spatiale non voulue du rayonnement de sortie.

L'invention a pour but de pallier les inconvénients précités.

Un autre but de l'invention est de proposer un dispositif de traitement d'un rayonnement optique plus facile à construire.

Encore un autre but de la présente invention est de proposer un dispositif de traitement d'un rayonnement optique plus rapide à construire.

Enfin un autre but de la présente invention, est de proposer un dispositif de traitement d'un rayonnement optique plus résistant aux chocs et vibrations.

### Exposé de l'Invention

L'invention permet d'atteindre au moins l'un des buts précités par un dispositif selon la revendication 1.

Autrement dit, un emplacement correcteur modifie les phases d'au moins deux composantes spatiales d'un rayonnement lumineux différemment.

Ainsi, le dispositif selon l'invention traite un rayonnement lumineux ou optique par une cavité multipassage définie de manière fixe et par un nombre d'éléments optiques faible, dans laquelle le rayonnement lumineux est réfléchi une pluralité de fois. La phase spatiale du rayonnement lumineux est modifiée lors d'au moins une réflexion ou transmission sur au moins un élément correcteur.

Par conséquent, le dispositif selon l'invention réalise avec un même élément correcteur fixe, une ou des modifications de phase spatiale du rayonnement lumineux.

Plus généralement, le dispositif selon l'invention permet de réaliser une pluralité de modifications de la phase spatiale du rayonnement lumineux avec un seul et même élément optique fixe, pouvant présenter des profils de phase différents pour différents emplacements de réflexion ou de transmission, alors que les systèmes de l'état de la technique prévoient d'utiliser autant d'éléments optiques que de modifications de la phase spatiale du rayonnement lumineux.

Le dispositif selon l'invention est plus facile à mettre en place, à utiliser et plus rapide à configurer, car le nombre d'éléments optiques à positionner entre eux et par rapport au rayonnement optique est plus faible. En outre, le faible nombre d'éléments optiques rend le dispositif selon l'invention moins couteux à fabriquer et permet d'améliorer la rigidité et la solidité du système final.

Bien entendu, s'agissant d'une cavité multipassage, le rayonnement optique est réfléchi sur chaque élément réfléchissant à tour de rôle. Autrement dit, deux réflexions du rayonnement optique sur un des éléments optiques réfléchissants définissant la cavité multipassage sont séparées par une réflexion sur l'autre des éléments optiques réfléchissants définissant la cavité multipassage.

Dans la présente invention, « la phase spatiale du rayonnement » est définie par les phases de l'ensemble des composantes spatiales du rayonnement.

De plus, le « profil de phase spatiale d'un emplacement correcteur » (de réflexion ou de transmission) est défini par l'ensemble des déphasages spatiaux (modifications de la phase spatiale) apportés par l'ensemble des points de réflexion ou de transmission dudit emplacement correcteur sur les différentes composantes spatiales du rayonnement lumineux lors d'une même réflexion ou transmission du rayonnement sur ledit emplacement correcteur. Le profil de phase peut être très simple dans le cas d'une réflexion sur un miroir plan.

En outre, selon l'invention un emplacement correcteur peut réaliser soit une réflexion du rayonnement soit une transmission du rayonnement.

Chaque élément optique réfléchissant (parmi l'au moins deux éléments optiques réfléchissants définissant une cavité multipassage) réfléchit ledit rayonnement lumineux au moins quatre fois en des emplacements de réflexion différents.

Selon l'invention, les irrégularités d'un emplacement correcteur peuvent être obtenues :
- en modifiant les profondeurs de la surface de réflexion ou de transmission par gravure de ladite surface ou dépôt d'une résine sur ladite surface, auquel cas la profondeur de réflexion ou de transmission est modifiée, et/ou
- en déposant sur, ou en réalisant, l'emplacement correcteur avec une matière modulant la phase des composantes spatiales du rayonnement, auquel cas la profondeur de réflexion ou de transmission n'est pas modifiée, par exemple avec des cristaux liquides.

Selon un exemple de réalisation préféré, mais nullement limitatif, les irrégularités d'un emplacement correcteur peuvent présenter des structures spatiales au moins 5 fois plus petites que la taille totale de l'emplacement correcteur.

Avantageusement, au moins un élément optique correcteur peut être formé par un des éléments optiques réfléchissants définissant la cavité multipassage. Dans ce cas, le nombre d'éléments optique du dispositif selon l'invention est diminué car un même élément optique est à la fois correcteur et définit la cavité multipassage.

Selon un exemple de réalisation particulier, le dispositif selon l'invention peut comprendre un unique élément correcteur correspondant à un des éléments optiques réfléchissants définissant la cavité multipassage. Ainsi, le dispositif selon l'invention est plus simple à configurer et moins coûteux car il nécessite un seul élément optique modifiant la phase spatiale du rayonnement qui définit également la cavité multipassage.

Selon un autre exemple de réalisation particulier, le dispositif selon l'invention peut comprendre deux éléments correcteurs correspondant respectivement aux éléments optiques réfléchissants définissant la cavité multipassage. Dans ce cas, chaque élément optique réfléchissant définissant la cavité multipassage comprend au moins un emplacement de réflexion correcteur modifiant la phase spatiale du rayonnement.

Dans cette version, le dispositif selon l'invention permet de réaliser une modification de la phase spatiale du rayonnement lumineux par les deux éléments réfléchissants définissant la cavité multipassage. Ainsi, il est possible de réaliser un traitement plus complet du rayonnement lumineux avec un nombre de réflexions plus faible dans la cavité multipassage. Par conséquent, dans cette version, le dispositif selon l'invention réalise un traitement du rayonnement lumineux en minimisant le nombre d'éléments optiques nécessaires.

Selon l'invention, au moins un élément correcteur peut être disposé dans la cavité multipassage et être distinct des éléments optiques réfléchissants définissant ladite cavité multipassage.

Dans ce cas, au moins un des éléments optiques réfléchissants définissant la cavité multipassage peut également être correcteur. Alternativement, les éléments optiques réfléchissants définissant la cavité multipassage peuvent ne pas être correcteurs.

Dans une version préférée du dispositif selon l'invention, au moins deux, en particulier tous les, emplacements de réflexion d'au moins un élément correcteur sont correcteurs. Ainsi, chaque emplacement correcteur présente une surface de réflexion ou de transmission irrégulière de sorte que le profil de phase spatiale de chaque emplacement correcteur présente un déphasage différent pour plusieurs points de réflexion ou transmission dudit emplacement correcteur.

Dans cette version, le dispositif selon l'invention permet de réaliser une modification de la phase spatiale du rayonnement lumineux lors de plusieurs, en particulier toutes les réflexions ou transmissions, sur l'élément correcteur. Ainsi, il est possible de réaliser un traitement plus complet et plus complexe du rayonnement lumineux dans la cavité multipassage.

Selon l'invention, au moins deux emplacements correcteurs qui peuvent être d'un même élément correcteur présentent des profils de phase différents. Ainsi, le dispositif permet de modifier différemment la phase spatiale du rayonnement lors de réflexions ou transmissions sur ces deux emplacements correcteurs d'un même élément optique correcteur.

Avantageusement, au moins deux emplacements correcteurs d'un même élément correcteur présentent des profils de phase identiques. Ainsi, le dispositif permet de modifier de manière identique la phase spatiale du rayonnement lors de réflexions ou transmission sur ces deux emplacements correcteurs d'un même élément optique correcteur.

En outre, au moins deux emplacements correcteurs de deux éléments optiques correcteurs différents peuvent présenter des profils de phase spatiale identiques ou différents.

Selon un exemple de réalisation, au moins un élément optique correcteur peut être une lame de phase.

Avantageusement, au moins un élément optique correcteur peut être une lame de phase présentant au moins deux profils de phase spatiale différents pour au moins deux emplacements correcteurs.

Dans ce cas, la lame de phase couvre au moins deux emplacements correcteurs différents. Chaque partie de la lame de phase correspondant à un emplacement correcteur présente un profil de phase spatiale souhaité pour cet emplacement correcteur, qui peut être différent du profil de phase spatiale souhaité pour un autre emplacement correcteur couvert par la lame de phase. Ainsi, l'unique lame de phase couvrant plusieurs emplacements correcteurs comporte au moins deux parties présentant des profils de phase spatiales différents. Dans ce mode de réalisation la construction du dispositif selon l'invention est facilitée car une seule et unique lame de phase est manipulée et positionnée dans la cavité multipassage.

Suivant un exemple de réalisation, la lame de phase peut être un miroir gravé, mais peut aussi être une résine déposée sur un substrat.

Avantageusement, au moins un élément optique correcteur peut être un modulateur de phase spatiale présentant au moins deux profils de phase spatiale différents pour au moins deux emplacements correcteurs.

Dans ce cas, le modulateur de phase spatial couvre au moins deux emplacements correcteurs différents. Chaque partie du modulateur de phase spatial correspondant à un emplacement correcteur présente un profil de phase spatiale souhaité pour cet emplacement correcteur, qui peut être différent du profil de phase spatiale souhaité pour un autre emplacement correcteur couvert par la lame de phase. Ainsi, l'unique modulateur de phase spatial couvrant plusieurs emplacements correcteurs comporte au moins deux parties présentant des profils de phase spatiales différents. Dans ce mode de réalisation le coût du dispositif selon l'invention est réduit car un seul et unique modulateur de phase spatial est nécessaire pour le dispositif.

Suivant un exemple de réalisation, le modulateur de phase spatial peut être un miroir déformé par des actuateurs, mais peut être aussi une matrice de cristaux liquides dont les propriétés de biréfringence sont contrôlées par une matrice d'électrodes.

En outre, au moins un élément réfléchissant définissant la cavité multipassage peut comprendre une ouverture traversante permettant d'injecter le rayonnement optique à traiter dans la cavité multipassage et/ou de sortir le rayonnement optique de ladite cavité multipassage après traitement.

Dans une forme de réalisation préférée et non limitative du dispositif selon l'invention, l'un des éléments optiques réfléchissants peut présenter une surface réfléchissante plane. Selon l'invention, un des éléments optiques réfléchissants présente une surface réfléchissante incurvée.

En particulier, la surface plane peut être une lame de phase présentant un ou des emplacements de réflexion correcteurs, la surface incurvée n'appliquant aucune modification de la phase spatiale particulière du rayonnement lumineux autre que la courbure mentionnée.

Dans une version préférée, mais nullement limitative, du dispositif selon l'invention, les éléments optiques réfléchissants définissant la cavité multipassage peuvent être positionnés suivant deux directions perpendiculaires entre-elles. Dans ce cas, le dispositif selon l'invention peut en outre comprendre un miroir, dit intermédiaire, disposé en regard desdits éléments optiques réfléchissants selon un angle de 45° par rapport à la direction de chacun desdits éléments optiques réfléchissants, et réfléchissant 99% du rayonnement lumineux.

Le miroir intermédiaire peut être un élément correcteur ou non.

Dans cette version non limitative, le dispositif selon l'invention est plus facile à configurer car il est facile d'observer chacun des éléments optiques réfléchissants de manière individuelle en observant, par exemple le 1% du rayonnement lumineux qui traverse le miroir intermédiaire.

Dans cette version du dispositif selon l'invention, la cavité multipassage est dite « coudée ».

Selon encore un autre aspect de l'invention il est proposé un système pour traiter un rayonnement optique, ledit système comprenant :
- un dispositif selon l'invention ;
- un moyen pour injecter ledit rayonnement dans ledit dispositif correcteur ; et
- un moyen pour collecter le rayonnement à la sortie dudit dispositif correcteur.

Selon encore un autre aspect qui ne fait pas partie de l'invention il est proposé un procédé pour concevoir un dispositif selon l'invention, ledit procédé comprenant les étapes suivantes :
- propager le rayonnement optique à traiter et un rayonnement, dit de référence, dans une cavité multipassage définie entre deux éléments optiques réfléchissants de sorte qu'au moins un desdits éléments optiques réfléchit ledit rayonnement optique au moins deux fois, en particulier en au moins deux emplacements de réflexion différents ;
- optimiser l'interférence entre lesdits rayonnements, ladite optimisation comprenant au moins une itération des étapes suivantes réalisées pour au moins un emplacement correcteur, sur au moins un élément correcteur :
   - déterminer, un paramètre relatif à une interférence entre lesdits rayonnements, par exemple au niveau dudit au moins un emplacement correcteur, et
   - modifier le profil de phase spatiale dudit au moins un emplacement correcteur ; et
   - configurer, au niveau dudit au moins un emplacement correcteur, le profil de phase spatiale, déterminé lors de ladite étape d'optimisation, et fournissant l'interférence optimisée.

Chacun des rayonnements à traiter et de référence peut être :
- un rayonnement effectivement propagé dans ladite cavité multipassage, le rayonnement de référence se propageant dans un sens de propagation opposé au sens de propagation du rayonnement optique à traiter ; ou
- un rayonnement virtuel représenté par un ensemble de données numériques. Dans ce second cas, les propagations des rayonnements reflètent les propriétés mesurées dans la cavité multipassage.

Dans le cas où le rayonnement à traiter et/ou le rayonnement de référence est virtuel, le procédé peut comprendre une étape pour collecter des données sur la géométrie de la cavité multipassage en mesurant les positions et la distribution d'amplitude des réflexions ou transmissions du rayonnement de référence et/ou à traiter, sur les différents éléments optiques en l'absence de profil de phase. Une telle mesure peut être réalisée par un moyen de mesure, tel qu'une caméra CCD, disposée en regard ou derrière l'emplacement de réflexion ou de transmission.

Dans le cas où la cavité multipassage est coudée, le miroir intermédiaire peut être en partie réfléchissant et le moyen de mesure, par exemple la caméra CCD, peut être disposé derrière le miroir intermédiaire en regard de l'emplacement correcteur, et plus généralement en regard de l'élément réfléchissant ou transmettant sur lequel se trouve l'emplacement de réflexion correcteur.

Le rayonnement à traiter et/ou le rayonnement de référence peuvent être propagés dans la cavité multipassage par simulation sur des moyens informatiques, la simulation tenant compte des caractéristiques de la cavité, à savoir caractéristiques optiques et physiques des éléments optiques définissant la cavité, la longueur de la cavité, les angles relatifs des différents éléments optiques, etc ; caractéristiques calculées en utilisant entre autres les informations capturées lors de l'étape de collecte de données relatives à la géométrie de la cavité multipassage.

La propagation des rayonnements virtuels de référence et à traiter au travers de la cavité peut être réalisée pour fournir les caractéristiques des rayonnements de référence et à traiter au niveau de chacun des emplacements correcteurs dans la cavité, à savoir l'intensité et le déphasage de chaque composante spatiale du rayonnement de référence et du rayonnement à traiter au niveau de chacun des emplacements correcteurs, de manière à déterminer le paramètre de corrélation de ces deux rayonnements comme décrit ci-dessus.

De plus, dans le cas où le traitement à réaliser est la correction de l'effet d'un milieu diffusant sur un rayonnement optique ayant parcouru ce milieu, le rayonnement à traiter est obtenu en sortie du milieu diffusant et le rayonnement de référence peut avantageusement être identique audit rayonnement à traiter avant que ledit rayonnement à traiter ait parcouru ledit milieu diffusant. Autrement dit, le rayonnement de référence peut être identique au rayonnement à traiter avant que celui-ci parcourt le milieu diffusant.

Le paramètre de corrélation peut être déterminé à chaque emplacement correcteur, de réflexion ou de transmission, dans la cavité multipassage, ou uniquement au niveau d'une partie seulement des emplacements correcteurs dans la cavité. Par exemple, le paramètre de corrélation peut être mesuré uniquement au niveau des emplacements correcteurs prévus pour appliquer un traitement au rayonnement optique à traiter. Ce paramètre de corrélation peut être la différence de phase spatiale entre le rayonnement à traiter et le rayonnement de référence.

Alternativement ou en plus, le paramètre de corrélation peut être mesuré en sortie de la cavité multipassage.

Le document WO2012/085046 A1 comprend plus de précision sur les mesures d'interférence et l'optimisation.

Le procédé de configuration d'un emplacement correcteur (de réflexion ou de transmission) peut comprendre une étape de mesure des caractéristiques du rayonnement à traiter et de référence au niveau de cet emplacement correcteur. Une telle mesure peut être réalisée par un moyen de mesure, tel qu'une caméra CCD, disposée en regard ou derrière l'emplacement correcteur.

Dans le cas où la cavité multipassage est coudée, le miroir intermédiaire peut être en partie réfléchissant et le moyen de mesure, par exemple la caméra CCD, peut être disposé derrière le miroir intermédiaire en regard de l'emplacement correcteur, et plus généralement en regard de l'élément réfléchissant/transmettant sur lequel se trouve l'emplacement correcteur.

Pour un emplacement correcteur donné, l'étape de configuration du dispositif de traitement du rayonnement lumineux, dit optimisé, déterminé lors de l'étape d'optimisation, et fournissant le traitement désiré, peut comprendre les étapes suivantes :
- fabrication d'une lame de phase comportant le ou les profils de phase optimisés,
- positionnement de la lame de phase au(x)dit(s) emplacement(s) correcteur(s).

La lame de phase peut être soit une lame de phase individuelle pour un emplacement correcteur, soit une lame de phase commune à plusieurs emplacements correcteurs et comportant différents profils de phase optimisés sur différentes régions de sa surface correspondant chacune à un emplacement correcteur.

Selon encore un autre aspect qui ne fait pas partie de l'invention il est proposé un système pour concevoir un dispositif selon l'invention, ledit système comprenant :
- au moins un moyen pour propager le rayonnement à traiter et un rayonnement, dit de référence, dans une cavité multipassage définie entre deux éléments optiques réfléchissants de sorte qu'au moins un desdits éléments optiques réfléchit ledit rayonnement optique au moins deux fois, en particulier en au moins deux emplacements de réflexion différents ;
- des moyens pour optimiser l'interférence entre lesdits rayonnements, ladite optimisation pouvant être réalisée ou bien de manière numérique ou optique, comprenant au moins une itération des étapes suivantes réalisées pour au moins un emplacement correcteur sur au moins un élément correcteur :
   - déterminer, un paramètre relatif à une interférence entre lesdits rayonnements, par exemple au niveau dudit au moins un emplacement correcteur, et
   - modifier le profil de phase spatiale dudit au moins un emplacement correcteur ; et
- au moins un moyen pour configurer, au niveau dudit au moins un emplacement correcteur, le profil de phase, déterminé lors de ladite étape d'optimisation, et fournissant l'interférence optimisée.

D'autres avantages et caractéristiques apparaîtront à l'examen de la description détaillée d'exemples nullement limitatifs, et des dessins annexés sur lesquels :
- la FIGURE 1 est une représentation schématique d'un exemple de réalisation non limitatif d'un dispositif selon l'invention ; et
- la FIGURE 2 est une représentation schématique d'un autre exemple de réalisation non limitatif d'un dispositif selon l'invention ;
- la FIGURE 3 est une représentation sous la forme d'un diagramme d'un exemple non limitatif d'un procédé pour la conception d'un dispositif selon l'invention ; et
- la FIGURE 4 est une représentation schématique d'un exemple non limitatif d'un système pour la conception d'un dispositif selon l'invention.

Il est bien entendu que les modes de réalisation qui seront décrits dans la suite ne sont nullement limitatifs.

Sur les figures, les éléments communs à plusieurs figures conservent la même référence.

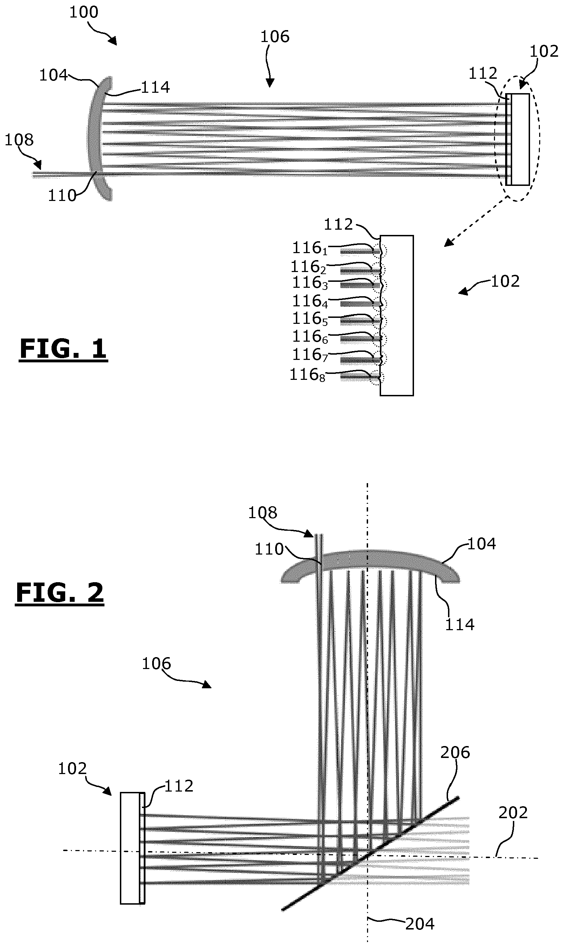

La FIGURE 1 est une représentation schématique d'un premier exemple non limitatif d'un dispositif de traitement d'un rayonnement lumineux.

Le dispositif 100 représenté sur la FIGURE 1 comprend deux éléments optiques réfléchissants 102 et 104 formant entre eux une cavité multipassage 106 dans laquelle un rayonnement lumineux à traiter 108 subit une pluralité de réflexions et de propagations.

S'agissant d'une cavité multipassage 106, le rayonnement lumineux 108 rencontre exactement (ni plus, ni moins) les mêmes éléments optiques intermédiaires (aucun élément intermédiaire dans le cas de la figure 1) le réfléchissant et/ou le transmettant entre chaque couple de réflexions successives par les éléments réfléchissants 102, 104, c'est à dire :
- pour chaque trajet partant d'un premier élément optique réfléchissant 102 (parmi l'au moins deux éléments optiques réfléchissants) et allant jusqu'à un deuxième élément optique réfléchissant 104 (parmi l'au moins deux éléments optiques réfléchissants), et
- pour chaque trajet partant du deuxième élément optique réfléchissant 104 et allant jusqu'au premier élément optique réfléchissant 102,
ces éléments optiques intermédiaires ne comprenant aucune lentille et/ou aucun élément (cube ou lame) polarisant changeant la polarisation du rayonnement lumineux 108.

L'élément réfléchissant 104 comporte une ouverture traversante 110 permettant au rayonnement optique d'entrer dans la cavité multipassage 106 pour être traité et de sortir de la cavité 106 après avoir été traité.

L'élément réfléchissant 102 comporte une surface réfléchissante 112 plane et l'élément réfléchissant 104 comporte une surface réfléchissante 114 concave ou incurvée.

La cavité multipassage définie par les miroirs 102 et 104 est agencée de sorte que le rayonnement lumineux 108 est réfléchi une pluralité de fois par chacun des miroirs, en des emplacements différents, et ce à tour de rôle. Ainsi, dans l'exemple représenté le miroir plan 102 réfléchit le rayonnement optique 108 huit fois en huit différents emplacements de réflexion sur la surface plane 112 et le miroir incurvé 104 réfléchit le rayonnement optique 108 sept fois, en sept emplacements de réflexion différents sur la surface plane 114.

L'élément réfléchissant 104 est formé par un miroir incurvé ou concave et n'applique aucune modification au profil de phase spatiale du rayonnement optique 108 en dehors de sa courbure.

L'élément réfléchissant 102 est dit correcteur. Cet élément réfléchissant 102 est formé par un miroir plan dont la surface réfléchissante 112 est déformée à l'échelle de la longueur d'onde, appliquant une modification de la phase spatiale du rayonnement optique. Pour ce faire, le miroir plan déformé présente au niveau de chaque emplacement de réflexion 116, une surface irrégulière de sorte que chaque emplacement de réflexion 116 est correcteur et présente un profil de phase spatiale modifiant la phase spatiale du rayonnement 108. Ainsi, chaque région/zone/emplacement de réflexion 116₁-116₈ présente des profondeurs différentes pour au moins deux composantes spatiales du rayonnement 108 et réalise une modification de la phase spatiale du rayonnement optique 108, c'est-à-dire des déphasages différents d'au moins deux composantes spatiales du rayonnement 108.

Chaque élément optique réfléchissant 102, 104 est agencé pour réfléchir ledit rayonnement lumineux 108 une pluralité de fois (au moins 4 fois, de préférence au moins 6 fois).

La cavité multipassage 106 est agencée pour que le rayonnement lumineux 108 fasse plusieurs aller-retours entre les (au moins) deux éléments optiques réfléchissants 102, 104.

Dans l'exemple représenté sur la FIGURE 1 l'élément réfléchissant 104 n'est pas correcteur. Alternativement, l'élément réfléchissant 104 peut aussi être correcteur, au moins pour une partie des emplacements de réflexion sur cet élément réfléchissant 104.

Dans l'exemple représenté sur la FIGURE 1 l'élément réfléchissant 102 est correcteur pour chaque emplacement de réflexion sur cet élément réfléchissant 102. Alternativement, l'élément réfléchissant 102 peut être correcteur pour une partie seulement des emplacements de réflexion sur cet élément réfléchissant 102.

Dans l'exemple représenté sur la FIGURE 1 tous les emplacements de réflexion correcteurs 116 sont représentés de manière différente, c'est-à-dire avec des profils de phase spatiale différents. Alternativement, chaque emplacement de réflexion correcteur 116 peut présenter une même irrégularité, c'est-à-dire un profil de phase identique à celui d'un autre emplacement de réflexion correcteur 116.

La FIGURE 2 est une représentation schématique d'un deuxième exemple non limitatif d'un dispositif traitement d'un rayonnement lumineux.

Le dispositif 200 représenté sur la FIGURE 2 comprend tous les composants du dispositif 100 de la FIGURE 1.

Dans le dispositif 200 les éléments réfléchissants 102 et 104 sont disposés selon deux directions, respectivement 202 et 204, perpendiculaires entre-elles, alors que sur la FIGURE 1 ils sont disposés sur une même direction ou sur deux directions parallèles entre-elles. La cavité multipassage 106 obtenue avec le dispositif de la FIGURE 2 est dite coudée.

Le dispositif 200 comprend en outre un miroir 206, intermédiaire, disposé en regard des éléments réfléchissant selon un angle 45° par rapport à chacune des directions 202 et 204. Le miroir intermédiaire 206 a pour rôle de diriger le rayonnement optique 108 provenant d'un des éléments réfléchissants 102 ou 104 vers l'autre des éléments réfléchissants 104 ou 102.

Le miroir intermédiaire 206 est un miroir réfléchissant à 99%. Par conséquent, ce miroir 206 laisse passer 1% du rayonnement 108 à chaque fois que celui-ci se réfléchit sur ce miroir intermédiaire 206.

S'agissant d'une cavité multipassage 106, le rayonnement lumineux 108 rencontre exactement (ni plus, ni moins) les mêmes éléments optiques intermédiaires (élément intermédiaire 206 dans le cas de la figure 2) le réfléchissant et/ou le transmettant entre chaque couple de réflexions successives par les éléments réfléchissants 102, 104, c'est à dire :
- pour chaque trajet partant du premier élément optique réfléchissant 102 et allant jusqu'au deuxième élément optique réfléchissant 104, et
- pour chaque trajet partant du deuxième élément optique réfléchissant 104 et allant jusqu'au premier élément optique réfléchissant 102,
ces éléments optiques intermédiaires ne comprenant de préférence aucune lentille et/ou aucun élément (cube ou lame) polarisant changeant la polarisation du rayonnement lumineux 108.

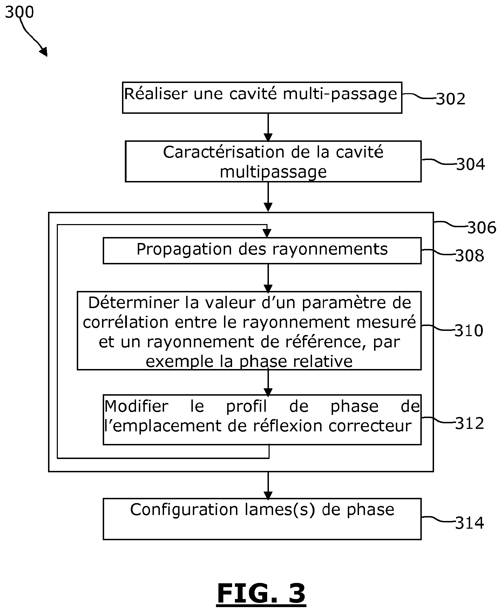

La FIGURE 3 est une représentation sous la forme d'un diagramme d'un exemple non limitatif d'un procédé pour la conception d'un dispositif selon l'invention.

Le procédé 300 comprend une étape initiale 302 de réalisation d'une cavité multipassage, par exemple la cavité 106 par association de deux miroirs 104 et 106.

Le procédé comprend ensuite une étape 304 de caractérisation de la géométrie de la cavité de mesure, c'est-à-dire la détermination des caractéristiques géométriques de la cavité, des emplacements de réflexion, etc. Une telle étape peut être réalisée par propagation dans la cavité d'un rayonnement, par exemple du rayonnement à traiter.

Lors d'une étape 306, le procédé détermine les profils de phase optimisés pour au moins deux emplacements de réflexion correcteurs sur l'un au moins des éléments réfléchissants définissant la cavité multipassage. Cette étape 306 comprend au moins une itération des étapes suivantes réalisées pour chaque emplacement de réflexion correcteur concerné de chaque élément réfléchissant correcteur :
- une étape 308 lors de laquelle le rayonnement à traiter et le rayonnement de référence sont propagés numériquement (dans des sens opposés) jusqu'au niveau de l'emplacement de réflexion correcteur, en tenant compte des profils de phase déjà calculés pour les autres emplacements de réflexion correcteur ;
- une étape 310 lors de laquelle la valeur de la phase relative entre le rayonnement de référence et le rayonnement à traiter est déterminé au niveau de l'emplacement de réflexion; et
- une étape 312 modifiant numériquement le profil de phase au niveau de l'emplacement de réflexion correcteur pour compenser la phase relative entre le rayonnement de référence et le rayonnement à traiter au niveau de l'emplacement de réflexion.

Les étapes 308-312 sont itérées autant de fois que nécessaire pour obtenir une valeur de recouvrement (produit scalaire spatial) des rayonnements optimisée, par exemple préalablement déterminée.

L'itération de ces étapes permet de déterminer un profil de phase optimisé pour chaque emplacement de réflexion correcteur concerné, permettant d'obtenir un paramètre de corrélation optimisé entre le rayonnement à traiter et un rayonnement de référence.

Lors d'une étape 314, réalisée après l'étape 306, une ou plusieurs lames de phase, comportant pour chaque emplacement de réflexion correcteur le profil de phase optimisé, sont imprimées sur l'élément réfléchissant concerné, par exemple par gravure de la face réfléchissante 112 du miroir 102.

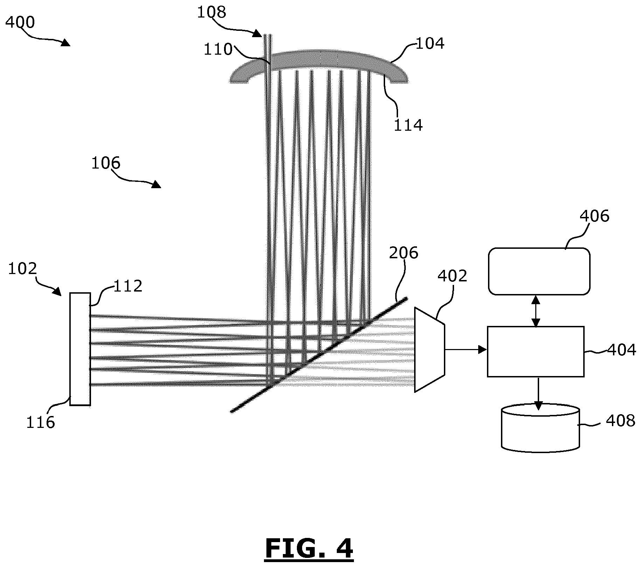

La FIGURE 4 est une représentation schématique d'un exemple non limitatif d'un système pour la conception d'un dispositif selon l'invention.

Le système 400 comprend une caméra CCD 402 permettant de mesurer le rayonnement à traiter au niveau d'une pluralité d'emplacements de réflexion sur un élément réfléchissant définissant la cavité multipassage, ces mesures permettant à la fois de caractériser le rayonnement à traiter ainsi que les propriétés géométriques de la cavité multipassage.

Un module 404 permet, par simulation, d'appliquer des profils de phases différents pour chacun des emplacements de réflexion correcteurs concernés en vue de déterminer le profil de phase optimisé pour chaque emplacement de réflexion correcteur.

Enfin, un module 406 permet de simuler la propagation du rayonnement à traiter et du rayonnement de référence au sein de la cavité multipassage en présence des profils de phase fournis par le module 404, afin de déterminer la valeur d'un paramètre de corrélation entre le rayonnement à traiter et le rayonnement de référence en différents emplacements correcteurs en fonction :
- des mesures réalisées par la caméra CCD 402, en particulier la caractérisation du rayonnement à traiter et de la géométrie de la cavité multipassage, et
- des profils de phase spatiale fournis par le module 404, et
- d'un rayonnement de référence virtuel, représenté par un ensemble de données numériques.

En fonction du paramètre de corrélation déterminé par le module 406, le profil de phase à l'emplacement considéré dans le module 404 est modifié.

Lorsque le module 406 détermine une valeur optimisée du paramètre de corrélation, les profils de phases déterminés par le module 404 fournissant cette valeur optimisée sont mémorisés dans des moyens de mémorisation 408.

Ces profils de phase optimisés sont ensuite utilisés pour fabriquer/configurer une ou des lames de phases, prévue(s) pour être disposée(s) à la place de l'élément réfléchissant concerné. Alternativement, il est possible d'imprimer la ou les lames de phase directement sur l'élément réfléchissant concerné tel que décrit en référence à la FIGURE 1.

Sur la FIGURE 4, le système 400 est représenté en combinaison avec le dispositif 200 de la FIGURE 2. Dans cette configuration, la caméra CCD 402 est positionnée derrière le miroir intermédiaire 206 et est focalisée sur la surface réfléchissante de l'élément réfléchissant concerné, à savoir la surface réfléchissante 112 du miroir plan 102.

Cependant, il est également possible d'utiliser le système 400 de la FIGURE 4 pour concevoir un dispositif suivant la configuration représentée en FIGURE 1. Dans ce cas, la caméra CCD 402 est positionnée derrière l'élément réfléchissant concerné, à savoir derrière le miroir 102.

Bien entendu, l'invention n'est pas limitée aux exemples qui viennent d'être décrits. Par exemple, dans les exemples donnés l'élément correcteur est un élément optique définissant la cavité multipassage. Alternativement ou en plus, il est possible d'avoir au moins un élément optique correcteur qui est distinct des éléments optiques réfléchissants définissant la cavité multipassage et disposé entre ces éléments réfléchissants, un tel élément optique correcteur pouvant être un élément optique réfléchissant ou transmettant le rayonnement optique, tel que par exemple le miroir intermédiaire 206 de la FIGURE 2.

De plus, dans les exemples donnés, les emplacements correcteurs sont tous des emplacements réfléchissants le rayonnement lumineux. Alternativement ou en plus, il est possible d'avoir au moins un emplacement correcteur qui réalise une transmission du rayonnement lumineux.

## Revendications

1. Dispositif (100 ; 200) pour traiter un rayonnement lumineux (108) comprenant au moins deux éléments optiques réfléchissants (102, 104) définissant une cavité (106) de sorte que chaque élément optique réfléchissant (102, 104) réfléchit ledit rayonnement lumineux (108), un (104) des éléments optiques réfléchissants comportant une surface réfléchissante incurvée (114), la cavité multipassage (106) ne comportant aucun élément optique intermédiaire constitué d'une lentille et/ou d'un élément polarisant, ledit dispositif comprenant au moins un élément, dit correcteur, présentant une pluralité d'emplacements correcteurs (116) réalisant chacun une réflexion ou une transmission dudit rayonnement lumineux et dont la surface est irrégulière de sorte que le profil de phase spatiale de chaque emplacement correcteur (116) présente un déphasage différent pour plusieurs points de réflexion/transmission différents dudit emplacement correcteur (116), et au moins deux des emplacements correcteurs (116) présentant des profils de phase différents, l'élément correcteur correspondant à :
- un des éléments optiques réfléchissants définissant la cavité, et/ou
- un élément correcteur disposé dans la cavité et distinct des éléments optiques réfléchissants définissant ladite cavité ; le dispositif (100 ; 200)
**étant caractérisé en ce que :**
- les au moins deux éléments optiques réfléchissants (102, 104) définissent une cavité multipassage (106) agencée pour que le rayonnement lumineux (108) fasse plusieurs aller-retours entre les au moins deux éléments optiques réfléchissants (102, 104) de sorte que chaque élément optique réfléchissant (102, 104) réfléchit ledit rayonnement lumineux (108) au moins quatre fois en des emplacements de réflexion différents.

2. Dispositif (100 ; 200) selon la revendication précédente, **caractérisé en ce qu'**au moins un élément correcteur est un des éléments optiques réfléchissants (102, 104) définissant la cavité multipassage.

3. Dispositif selon l'une quelconque des revendications 1 et 2, **caractérisé en ce qu'**il comprend au moins deux éléments correcteurs correspondants respectivement aux éléments optiques réfléchissants (102, 104) définissant la cavité multipassage (106).

4. Dispositif selon l'une quelconque des revendications précédentes, **caractérisé en ce qu'**au moins un élément correcteur est disposé dans la cavité multipassage (106) et est distinct des éléments optiques réfléchissants (102, 104) définissant ladite cavité multipassage.

5. Dispositif selon l'une quelconque des revendications précédentes, **caractérisé en ce qu'**au moins deux desdits emplacements correcteurs (116) présentent des profils de phase identiques.

6. Dispositif (100 ; 200) selon l'une quelconque des revendications précédentes, **caractérisé en ce qu'**au moins un élément optique correcteur (102) comprend au moins une lame de phase au niveau d'au moins un emplacement correcteur (116).

7. Dispositif selon l'une quelconque des revendications précédentes, **caractérisé en ce qu'**au moins un élément optique correcteur comprend une unique lame de phase présentant au moins deux profils de phase spatiale pour au moins deux emplacements correcteurs (116).

8. Dispositif (200) selon l'une quelconque des revendications précédentes, **caractérisé en ce que** les éléments optiques réfléchissants (102, 104) définissant la cavité multipassage (106) sont positionnés suivant deux directions (202, 204) perpendiculaires entre-elles, ledit dispositif (200) comprenant en outre un miroir (206) disposé en regard desdits éléments optiques réfléchissants (102, 104) selon un angle de 45° par rapport à la direction (202, 204) de chacun desdits éléments optiques réfléchissants (102, 104).

9. Dispositif selon l'une quelconque des revendications précédentes, **caractérisé en ce que** les irrégularités de l'emplacement correcteur (116) présentent des structures spatiales au moins 5 fois plus petites que la taille totale de l'emplacement correcteur (116).

10. Système pour traiter un rayonnement optique (108) par une succession de propagations, comprenant :
- un dispositif correcteur (100, 200) selon l'une quelconque des revendications 1 à 9 ;
- un moyen pour injecter ledit rayonnement (108) dans ledit dispositif correcteur
- un moyen pour collecter ledit rayonnement (108) à la sortie dudit dispositif correcteur.

## Patentansprüche

1. Vorrichtung (100; 200) zur Verarbeitung von Lichtstrahlung (108), umfassend mindestens zwei reflektierende optische Elemente (102, 104), die einen Hohlraum (106) definieren, derart, dass jedes reflektierende optische Element (102, 104) die Lichtstrahlung (108) reflektiert, wobei eines (104) der reflektierenden optischen Elemente eine gekrümmte reflektierende Oberfläche (114) aufweist, wobei der Hohlraum (106) mit mehreren Durchgängen kein optisches Zwischenelement aufweist, das aus einer Linse und/oder einem polarisierenden Element besteht, wobei die Vorrichtung mindestens ein Element umfasst, wobei der Korrektor mehrere Korrekturstellen (116) aufweist, die jeweils eine Reflexion oder Transmission der Lichtstrahlung bereitstellen und eine unregelmäßige Oberfläche aufweisen, derart, dass das räumliche Phasenprofil jeder Korrekturstelle (116) eine unterschiedliche Phasenverschiebung für mehrere unterschiedliche Reflexions-/Transmissionspunkte der Korrekturstelle (116) aufweist, und wobei mindestens zwei der Korrekturstellen (116) unterschiedliche Phasenprofile aufweisen, wobei das Korrekturelement Folgendem entspricht:
- eines der reflektierenden optischen Elemente, die den Hohlraum definieren, und/oder
- ein Korrekturelement, das in dem Hohlraum angeordnet ist und sich von den reflektierenden optischen Elementen, die den Hohlraum definieren, unterscheidet;
wobei die Vorrichtung (100; 200) **dadurch gekennzeichnet ist, dass:**
- die mindestens zwei reflektierenden optischen Elemente (102, 104) einen Hohlraum (106) mit mehreren Durchgängen definieren, der so angeordnet ist, dass sich die Lichtstrahlung (108) zwischen den mindestens zwei reflektierenden optischen Elementen (102, 104) mehrmals hin und her bewegt, derart, dass jedes reflektierende optische Element (102, 104) die Lichtstrahlung (108) mindestens viermal an verschiedenen Reflexionsstellen reflektiert.

2. Vorrichtung (100; 200) nach dem vorhergehenden Anspruch, **dadurch gekennzeichnet, dass** mindestens ein Korrekturelement eines der reflektierenden optischen Elemente (102, 104) ist, die den Hohlraum mit mehreren Durchgängen definieren.

3. Vorrichtung nach einem der Ansprüche 1 und 2, **dadurch gekennzeichnet, dass** sie mindestens zwei Korrekturelemente umfasst, die jeweils den reflektierenden optischen Elementen (102, 104) entsprechen, die den Hohlraum (106) mit mehreren Durchgängen definieren.

4. Vorrichtung nach einem der vorhergehenden Ansprüche, **dadurch gekennzeichnet, dass** mindestens ein Korrekturelement in dem Hohlraum (106) mit mehreren Durchgängen angeordnet ist und sich von den reflektierenden optischen Elementen (102, 104), die den Hohlraum mit mehreren Durchgängen definieren, unterscheidet.

5. Vorrichtung nach einem der vorhergehenden Ansprüche, **dadurch gekennzeichnet, dass** mindestens zwei der Korrekturstellen (116) identische Phasenprofile aufweisen.

6. Vorrichtung (100; 200) nach einem der vorhergehenden Ansprüche, **dadurch gekennzeichnet, dass** mindestens ein optisches Korrekturelement (102) mindestens eine Phasenplatte an mindestens einer Korrekurstelle (116) umfasst.

7. Vorrichtung nach einem der vorhergehenden Ansprüche, **dadurch gekennzeichnet, dass** mindestens ein optisches Korrekturelement eine einzige Phasenplatte mit mindestens zwei räumlichen Phasenprofilen für mindestens zwei Korrekturstellen (116) umfasst.

8. Vorrichtung (200) nach einem der vorhergehenden Ansprüche, **dadurch gekennzeichnet, dass** die reflektierenden optischen Elemente (102, 104), die den Hohlraum (106) mit mehreren Durchgängen definieren, entlang zweier zueinander senkrechter Richtungen (202, 204) angeordnet sind, wobei die Vorrichtung (200) ferner einen Spiegel (206) umfasst, der den reflektierenden optischen Elementen (102, 104) gegenüberliegend unter einem Winkel von 45° in Bezug auf die Richtung (202, 204) jedes der reflektierenden optischen Elemente (102, 104) angeordnet ist.

9. Vorrichtung nach einem der vorhergehenden Ansprüche, **dadurch gekennzeichnet, dass** die Unregelmäßigkeiten der Korrekturstelle (116) räumliche Strukturen aufweisen, die mindestens 5 mal kleiner sind als die Gesamtgröße der Korrekturstelle (116).

10. System zur Verarbeitung von optischer Strahlung (108) durch eine Folge von Ausbreitungen, umfassend :
- eine Korrekturvorrichtung (100, 200) nach einem der Ansprüche 1 bis 9;
- eine Einrichtung zum Einkoppeln der Strahlung (108) in die Korrekturvorrichtung
- eine Einrichtung zum Sammeln der Strahlung (108) am Ausgang der Korrekturvorrichtung.

## Claims

1. Device (100; 200) for processing light radiation (108), comprising at least two reflective optical elements (102, 104) defining a cavity (106) such that each reflective optical element (102, 104) reflects said light radiation (108), one (104) of the reflective optical elements comprising an inwardly curved reflective surface (114), the multi-passage cavity (106) not comprising any intermediate optical element consisting of a lens and/or of a polarizing element, said device comprising at least one element, referred to as a correction element, having a plurality of correction locations (116) which each reflect or transmit said light radiation and the surface of which is irregular such that the spatial phase profile of each correction location (116) has a phase shift that is different for a plurality of different reflection/transmission points of said correction location (116), and at least two of the correction locations (116) having different phase profiles, the correction element corresponding to:
- one of the reflective optical elements defining the cavity, and/or
- a correction element which is arranged in the cavity and different from the reflective optical elements defining said cavity;
the device (100; 200) **being characterized in that:**
- the at least two reflective optical elements (102, 104) define a multi-passage cavity (106) arranged such that the light radiation (108) travels back and forth a number of times between the at least two reflective optical elements (102, 104) such that each reflective optical element (102, 104) reflects said light radiation (108) at least four times at different reflection locations.

2. Device (100; 200) according to the preceding claim, **characterized in that** at least one correction element is one of the reflective optical elements (102, 104) defining the multi-passage cavity.

3. Device according to either claim 1 or claim 2, **characterized in that** it comprises at least two correction elements corresponding, respectively, to the reflective optical elements (102, 104) defining the multi-passage cavity (106).

4. Device according to any of the preceding claims, **characterized in that** at least one correction element is arranged in the multi-passage cavity (106) and is different from the reflective optical elements (102, 104) defining said multi-passage cavity.

5. Device according to any of the preceding claims, **characterized in that** at least two of said correction locations (116) have identical phase profiles.

6. Device (100; 200) according to any of the preceding claims, **characterized in that** at least one correction optical element (102) comprises at least one phase plate at at least one correction location (116).

7. Device according to any of the preceding claims, **characterized in that** at least one correction optical element comprises a single phase plate having at least two spatial phase profiles for at least two correction locations (116).

8. Device (200) according to any of the preceding claims, **characterized in that** the reflective optical elements (102, 104) defining the multi-passage cavity (106) are positioned in two directions (202, 204) that are perpendicular to one another, said device (200) further comprising a mirror (206) arranged so as to face said reflective optical elements (102, 104) at an angle of 45° with respect to the direction (202, 204) of each of said reflective optical elements (102, 104).

9. Device according to any of the preceding claims, **characterized in that** the irregularities in the correction location (116) have spatial structures at least 5 times smaller than the total size of the correction location (116).

10. System for processing optical radiation (108) by means of a succession of propagations, comprising:
- a correction device (100, 200) according to any of claims 1 to 9;
- means for feeding said radiation (108) into said correction device;
- means for collecting said radiation (108) at the output of said correction device.
